(19)

Europäisches
Patentamt
European
Patent Office
Office européen
des brevets

(11) **EP 4 650 703 A1**

(12) **EUROPEAN PATENT APPLICATION**

(43) Date of publication:
**19.11.2025 Bulletin 2025/47**

(21) Application number: **24175569.3**

(22) Date of filing: **14.05.2024**

(51) International Patent Classification (IPC):
**G01B 3/28** (2006.01)          **G01B 5/06** (2006.01)
**G01B 11/06** (2006.01)

(52) Cooperative Patent Classification (CPC):
**G01B 11/0616; G01B 3/28; G01B 5/066**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **HELIOSONIC GmbH
46483 Wesel (DE)**

(72) Inventor: **The designation of the inventor has not
yet been filed**

(74) Representative: **Kleine, Hubertus
Loesenbeck - Specht - Dantz
Patent- und Rechtsanwälte
Am Zwinger 2
33602 Bielefeld (DE)**

(54)     **MEASURING DEVICE FOR MEASURING THE THICKNESS OF AN INK FILM**

(57)     The invention relates to a measuring device (1) for measuring the thickness of an ink film (2) on a colorant carrier (3), in particular a colorant belt, with a flat surface (31) supporting the ink film (2). The measuring device (1) comprises: an optical unit (4), such as an imaging unit, in particular a camera, arranged to receive light reflected by a section (21) of the ink film (2), and a deforming unit (5; 5A, 5B, 5C, 50) arranged to deform at least part of the section (21) of the ink film (2). The deforming unit (5; 5A, 5B, 5C, 50) comprises: a foot section (51) arranged to contact the colorant carrier (3), a first deforming section (52) arranged at a first depth with respect to the foot section (51), and a second deforming section (53) arranged at a second depth with respect to the foot section (51), wherein the second depth is greater than the first depth.

Fig. 1

EP 4 650 703 A1

**Description**

The invention relates to thickness measurement. The invention relates to a measuring device for measuring the thickness of an ink film on a colorant carrier, to a printing device comprising such a measuring device, and to a measuring method for measuring the thickness of an ink film on a colorant carrier.

The thickness of an ink film is an important parameter for the quality of the printing result. However, providing information on the thickness of the film requires relatively high cost and complex equipment. For example, the complexity of the equipment results in that high expenses with respect to maintenance are required. Thus, there is a need for measuring the thickness of the ink film with relatively low costs and/or low maintenance expenses. Further, there is a need to provide such a measuring without, or at least less, interference with the printing process.

One or more of these objects, or other objects which become apparent upon reading the following description, are solved by the subject matter of the independent claim. The dependent claims refer to preferred embodiments of the invention.

SUMMARY OF THE INVENTION

According to a first aspect of the invention, a measuring device for measuring the thickness of an ink film on a colorant carrier, in particular a colorant belt, with a flat surface supporting the ink film, is provided. The measuring device comprises: an optical unit, such as an imaging unit, in particular a camera, arranged to receive light reflected by a section of the ink film; and a deforming unit arranged to deform at least part of the section of the ink film. The deforming unit comprises: a foot section arranged to contact the colorant carrier; a first deforming section arranged at a first depth with respect to the foot section; and a second deforming section arranged at a second depth with respect to the foot section, wherein the second depth is greater than the first depth.

Bringing the deforming unit, via its foot section, into contact with the colorant carrier results in a deformed ink film. Depending on the thickness of the ink film, the first and/or second deforming sections deform the ink film or not. The deformed ink film can then be analysed by using at least the optical unit. Since the provision of the deforming sections with respect to the foot section is known, the thickness of the ink film can be determined based on the deformed section of the ink film in an easy manner. Further, this provides the additional advantage that a device, in which the measuring device is used, such as a printing device (e.g. a print head), does not have to be opened. Information on the appearance of the deformed ink film, and thus a determination of the thickness of the ink film based on this deformed ink film, can be provided via the optical unit. This also opens the possibility that a process, such as a printing process, using the measuring device does not need to be completely stopped for measuring the thickness of the ink film.

The first and/or second deforming section/s may be arranged laterally with respect to the foot section.

The first and second deforming sections may be separated from one another, e.g. via a recess such as a gap, or may be unseparated from one another, e.g. by the region connecting the deforming sections with one another being free of any recess such as a gap. For example, a continuous surface (e.g. flat or curved) may comprise the first and second deforming sections.

The deforming unit may comprise a recessed section, wherein the recessed section comprises the first and second deforming sections.

At least part of the recessed section may be delimited by the foot section. For example, the foot section may be arranged at least on one lateral side of the recessed section. The foot section may delimit the recessed section on both lateral sides of the recessed section.

The recessed section may be a gap or a groove.

The deforming unit may comprise a sloped section, wherein the sloped section comprises the first deforming section and/or the second deforming section. Accordingly, the deforming sections can be provided in a particularly easy manner.

The sloped section may be sloped with respect to contact surface of the foot section and/or a side wall of the deforming unit. For example, the side wall may be provided by, or extend from, the foot section and/or may delimit the recessed section. Additionally, or alternatively, the sloped section may extend from the foot section.

If the deforming unit is in contact with the colorant carrier, the sloped section may be sloped, or inclined, with respect to the flat surface of the colorant carrier.

The sloped section may have a slope of 1% or less, preferably of 0.5% or less. For example, the slope may go from 0 to 200$\mu$m within 42mm.

The deforming unit may comprise a, e.g. convex and/or concave, curved section, wherein the curved section comprises the first deforming section and/or the second deforming section. For example, the curved section may be provided by a structure in the form of at least part of a sphere, a cone and/or a cylinder.

The deforming unit may comprise a plurality of protrusions, wherein the plurality of protrusions comprises the first deforming section and/or the second deforming section. Optionally, the deforming unit comprises a comb-like structure comprising the plurality of protrusions.

The foot section may comprise a flat or horizontal contact surface arranged to contact the colorant carrier, wherein the first and second depths are with respect to the contact surface. In particular, a virtual plane may be parallel to, and/or may virtually extend, the contact surface, wherein the first depth corresponds to a first distance between the first deforming section and the virtual plane, and wherein the second depth corresponds to a second distance between the second deforming section and the virtual plane. The second distance is greater than the first distance.

The foot section may comprise one or more foot sub-sections (such as one foot or a plurality of feet), wherein, optionally, the first deforming section and/or the second deforming section extend/s between the foot sub-sections. For example, the recessed section is defined by the foot sub-sections and/or extends between the foot sub-sections. In other words, the foot sub-sections may delimit a groove or gap, which may be the recessed section. A plurality of foot sub-sections achieves the advantage that at least two grooves as "reference grooves" can be provided in the ink film, thereby ensuring a proper contact of the deforming unit with the colorant carrier for the measurement.

The measuring device may comprise a (electronic) processing unit configured to receive (electronic) signals, such as an image, from the optical unit. Thus, the processing unit may simplify, such as automate, a measurement of the thickness of the ink film.

The processing unit may be configured to determine, or at least estimate, a thickness of an ink film based on the signals and, optionally, on a geometrical property of the first and second deforming sections, such as a slope and/or a curve defined by the first deforming section and/or second deforming section.

For example, the received signals form an image, showing the section of the ink film being deformed by the first and second deforming sections. In other words, the optical unit may be configured to capture an (digital) image of the deformed section of the ink film, wherein the processing unit may be configured to receive this image. The processing unit may detect a measurement, or dimension, defined by the one or more deformations provided by the first and/or second deforming sections, such as a width of a groove provided in the ink film by at least the foot section and, if the thickness of the ink film is high enough, by the deforming section(s). The processing unit may determine the ink film thickness based on such a measurement and/or a calculation based on the measurement and, optionally, on the (known) geometrical property of the first and second deforming sections.

The processing unit may be configured to send, based on the signals received from the optical unit, (thickness) signals. In particular, the processing unit may be configured to send to such (thickness) signals to a device configured to adjust a thickness of the ink film, such as an inking unit for providing an ink film on the colorant carrier, in particular a transfer device arranged to transfer fresh colorant towards, or onto, the colorant carrier. By the (thickness) signals, the thickness determined or estimated by the processing unit may be conveyed. Thus, the measuring device may be configured to correct a thickness of an ink film with the help of image analysis performed by the processing unit and the optical unit.

The measuring device may comprise a light source arranged to emit (e.g. homogenous and/or white) light onto at least the section of the ink film. In particular, the light source may illuminate at least the section of the ink film. Alternatively, or additionally, at least the section of the ink film may be exposed to ambient light, such as natural light and/or (artificial) light emitted by a light source not provided by the measuring device.

The measuring device may comprise a cleaning device arranged to remove, from the deforming unit, ink that has been transferred from the ink film onto the deforming unit contacting the colorant carrier. Accordingly, ink that has been transferred onto the deforming unit during a measurement of the thickness of the ink film can be easily removed, enabling a reliable measurement of the ink film thickness. Cleaning the deforming unit by the cleaning device may be performed between two measuring steps.

The measuring device may comprise a support arranged to support a section of the colorant, which section is in contact with the deforming unit. The support may comprise a rigid support or a roller. For example, the roller may be a deflection roller. The deflection roller may be already present in the printing device or may be arranged to provide a roller in the printing device, thereby particularly reducing costs.

The deforming unit may be flexibly supported or loaded, such as spring loaded. This achieves in particular the advantage that contact between the deforming unit and the colorant carrier does not result in undesired forces in the deforming unit and/or the colorant carrier. For example, the measuring device may comprise an elastic element, such as a spring, connected to the deforming unit so that the latter is flexibly supported or loaded. The deforming unit may be flexibly supported or loaded along a direction that is transverse, such as perpendicular, to the flat surface of the colorant carrier or the moving direction of the colorant carrier.

According to a second aspect of the invention, a printing device is provided. The printing device comprises: a measuring device as explained above; a colorant carrier configured to move along a direction; and a delivery device arranged to deliver at least part of an ink film from the colorant carrier to a substrate or a transmission means.

The printing device may comprise an inking unit for providing an ink film on the colorant carrier, such as a transfer device configured to transfer fresh colorant towards, or onto, the colorant carrier. The inking unit may be functionally connected, e.g. via the processing unit, to the optical unit.

According to a third aspect of the invention, a measuring method for measuring the thickness of an ink film on a colorant carrier is provided. The method uses a) a measuring device, or deforming unit, as explained above or b) a deforming unit with a foot section and at least first and second deforming sections, wherein the first deforming section is arranged at a first depth with respect to the foot section, and wherein the second deforming section is arranged at a second depth with respect to the foot section, wherein the second depth is greater than the first depth. The method comprises the steps of: contacting, by the foot section, a colorant carrier, wherein the colorant carrier carries an ink film; deforming, by the first and/or second deforming sections, a section of the ink film, thereby obtaining a deformed section; and receiving, by an optical unit such as an imaging unit, in particular a camera, light reflected by at least the deformed section of the ink film.

The measuring method may comprise the steps of: receiving, by a processing unit, signals, such as an image (i.e. signals forming an image), from the optical unit; and determining or at least estimating, by the processing unit, a (determined or at least estimated) thickness of the ink film based on the signals and, optionally, on a geometrical property of the first and second deforming sections, such as a slope and/or a curve defined by the first deforming section and/or second deforming section.

The measuring method may comprise the step of calibrating, e.g. by using a calibration device, i.e. a device of known accuracy. This achieves the advantage of precise quantitative ink film thickness measurements by the use of the measuring device and/or deforming unit. The step of calibrating preferably comprises measuring a reference ink film thickness, e.g. by the calibration device, and comparing the reference ink film thickness to the determined or at least estimated thickness of the ink film. Based on the step of calibrating, an accuracy may be determined. Based on the accuracy, the determined or at least estimated thickness of the ink film may be adjusted.

For example, the measuring method may involve i.) bringing the deforming unit, e.g. in the form of a machined part, with the well-known and calibrated deforming sections, preferably provided by indentations of different depths, in contact with the surface of the colorant carrier and ii.) analysing one or more images of the ink film surface after the contact. The thickness of the ink film is then given by the location of the last indentation, which made a deformation on the film surface. The method may include image analysis, so that, for example, the deformations $(g_1, g_2)$ in the ink film are determined from the image analysis. The thickness of the film then would be given by the depth $h$ at the position $g_2$.

The fineness of the profile of the deforming unit, such as the variation of the depth in relation to a width, can be determined based on the requirements of the ink and the accuracy of the measurement.

The measured ink film thickness may be compared to a desired thickness, wherein, optionally, ink film parameters may be automatically adjusted to achieve the desired thickness.

The method may include measuring a deformation and comparing the measured deformation with expected dimensions of the deforming unit. This acts as a checking mechanism for the correct contact between the deforming unit and the colorant carrier.

DESCRIPTION OF PREFERRED EMBODIMENTS

Exemplary embodiments of the invention are now further explained with respect to the drawings by way of example only, and not for limitation. In the drawings:

Fig. 1     shows a schematic view of a measuring device according to an embodiment;

Fig. 2     shows a schematic cross-sectional view of a deforming unit according to a first variant;

Fig. 3     shows a schematic cross-sectional view of a deforming unit according to a second variant;

Fig. 4     shows a schematic cross-sectional view of a deforming unit according to a third variant;

Fig. 5     shows a schematic cross-sectional view of a deforming unit according to a fourth variant;

Fig. 6     shows a schematic view of a printing device according to an embodiment;

Fig. 7     shows a simplified image (top view) of an ink film before deformation by a deforming unit of a measuring device according to an embodiment;

Fig. 8     shows a simplified image (top view) of the ink film according to Fig. 7 after deformation by a deforming unit of a measuring device according to an embodiment; and

Fig. 9     is a diagram of the profile of the ink film shown in Fig. 8.

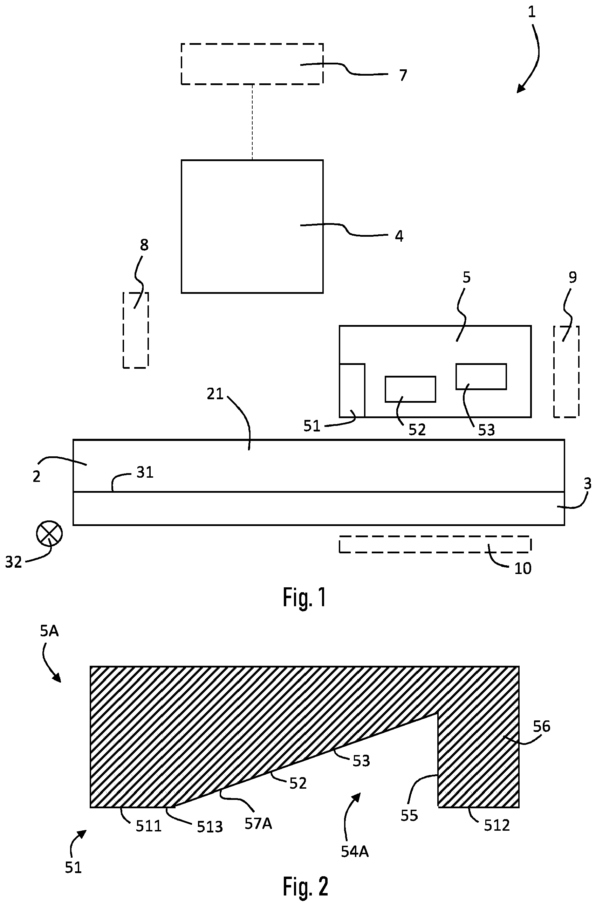

Fig. 1 shows a measuring device 1 arranged to measure the thickness of an ink film 2 on (arranged on, supported by, etc.) a colorant carrier 3. The colorant carrier 3 may be a colorant belt and/or a colorant roller or any other structure capable of carrying the ink film 2. The colorant carrier 3 comprises a flat surface 31 on which the ink film 2 is provided, in particular supported and/or arranged. The ink film 2 contacts the flat surface 31. The colorant carrier 3 may be arranged to move along a direction 32. In Fig. 1, the direction 32 is perpendicular and into the drawing plane. Moving the colorant carrier 3 along the direction 32 may be achieved by using a driving structure comprising one or more rollers and/or a driving unit, wherein the one or more rollers may comprise a deflection roller.

The measuring device 1 comprises an optical unit 4 arranged to receive light reflected by a section 21 of the ink film 2. The optical unit 4 may be an imaging unit such as a camera and/or may comprise one or more light sensors for receiving the reflected light. For example, light, e.g. in the form of a plurality of light rays, may be reflected by the section 21 and received by the one or more light sensors. Thereby, the one or more light sensors may generate one or more signals corresponding to the received, or not received, light, e.g. forming an (digital) image of the section 21. In another embodiment, the optical unit 4 may be an optical unit different from an imaging unit, such as a detecting structure for detecting whether light rays reflected by the section 21 are received by the optical unit 4 or not without generating any image of the section 21.

The measuring device 1 further comprises a deforming unit 5 arranged to deform at least part of the section 21. For example, the deforming unit 5 deforms the section 21, which then moves along the moving direction 32 to a position where the optical unit 4 can receive light reflected by the section 21. The deforming unit 5 comprises a foot section 51 arranged to contact the colorant carrier 3, in particular the surface 31. The deforming unit 5 further comprises at least a first deforming section 52 and a second deforming section 53. The first deforming section 52 is arranged at a first depth with respect to the foot section 51. The second deforming section 53 is arranged at a second depth with respect to the foot section 51. The second depth is greater than the first depth. In other words, with respect to the foot section 51, the second deforming section 53 is arranged at a lower level than the first deforming section 52.

Accordingly, when the deforming unit 5 is arranged such that the foot section 51 contacts the colorant carrier 3, the ink film 2 is deformed at least by the foot section 51 and, if the thickness of the ink film 2 is high or thick enough, also by the first deforming section 52 and/or the second deforming section 53. For example, if the ink film 2 is not deformed by the first deforming section 52 when the foot section 51 contact the colorant carrier 3, the thickness of the ink film 2 is less than the first depth. However, if the ink film 2 is deformed by the first deforming section 52, but not by the second deforming section 53, the thickness of the ink film 2 corresponds to more than the first depth, but less than the second depth; in other words, the thickness of the ink film 2 is somewhere between the first depth and the second depth. If the ink film 2 is also deformed by the second deforming section 53, then the thickness of the ink film is greater than the second depth.

As the optical unit 4 is arranged to receive light reflected by the section 21 of the ink film 2, which section 21 comprises a deformation provided at least by the foot section and, if the thickness if the ink film 2 is high enough, also by the first deforming section 52 and/or the second deforming section 53, the optical unit 4 opens the possibility of easily detecting the thickness of the ink film 2 based on the identified deformation and, optionally, a geometry defined by the first and second deforming sections 52, 53.

As shown in Figs. 2-5, the foot section 51 may comprise at least two foot sub-sections 511, 512. In other embodiments, the foot section 51 may comprise only one foot sub-section, or foot, such as the foot sub-section 511 or the foot sub-section 512. The deforming sections 52, 53 may extend between the foot sub-sections 511, 512 and/or may be arranged laterally with respect to the foot sub-section 511 and/or foot sub-section 512. In particular, when seen along a direction parallel to the depths, such as in a top view of the deforming unit 5, the deforming sections 52, 53 may be arranged between the foot sub-sections 511, 512.

The foot section 51 may comprise a flat or horizontal contact surface 513 arranged to contact the colorant carrier 3. For example, the first and second depths are with respect to the contact surface 513. A virtual plane may be parallel to the contact surface 513, wherein the first and second depths correspond to first and second distances, respectively, wherein the first distance is between the first deforming section 52 and the virtual plane and the second distance is between the second deforming section 53 and the virtual plane. The virtual plane may be a virtual extension of the contact surface 513. The contact surface 513 may be provided by the foot sub-section 511 and/or foot sub-section 512. For example, the contact surface 513 lies within the virtual plane. In particular, each of the foot sub-sections 511, 512 may comprise a respective contact surface, wherein these contact surfaces are both lying within the virtual plane.

The first and second deforming sections 52, 53 may be provided in many different ways.

Figs. 2-5 show some of the different possible ways to provide the at least first and second deforming sections 52, 53. Thus, Figs. 2-5 show that the deforming unit 5 may be provided at least according to one or more of the deforming units 5A, 5B, 5C, 5D shown in Figs. 2-5, respectively.

Fig. 2 shows the deforming unit 5A. The deforming unit 5A may comprise a recessed section 54A that comprises, or contains, the first and second deforming sections 52, 53. The recessed section 54A may be delimited by at least part of the foot section 51, such as by the foot sub-section 511, in particular a rim of the foot sub-section 511. Additionally, or alternatively, the recessed section 54A may be delimited by the foot sub-section 512 and/or a side wall 55. For example, the deforming unit 5 (5A) may comprise a leg 56 that comprises at least part of the foot section 51, such as the foot sub-section 512, and/or the side wall 55. The side wall 55 may extend from the foot sub-section 512, e.g. along a direction parallel to the first and second depths. The recessed section 54A may be delimited by the foot sub-section 512, such as by a rim of the foot 512. The recessed section 54A may be a gap or a groove, in particular having a varying depth, e.g., along the width (which may extend from the foot sub-section 511 to the foot sub-section 512) of the deforming unit 5A.

The deforming unit 5A may comprise a sloped section 57A that comprises the first deforming section 52 and/or the second deforming section 53. The sloped section 57A is thus sloped in such a way that the first and second deforming sections 52, 53 are provided at the first and second depths, respectively. The sloped section 57A may be sloped (or inclined) with respect to the side wall 55, e.g. at an angle of more than 45°, preferably more than 80°. The sloped section 57A may extend from at least part of the foot section 51, such as from the foot 511, in particular from a rim provided by the foot 513, towards the side wall 55 or leg 56. The sloped section 57A may be sloped (or inclined), or may extend obliquely, with respect to the contact surface 513 or the virtual plane, e.g. at an angle of less than 45°, preferably less than 10°. The sloped section 57A may be a bottom of the recessed section 54A, wherein the side wall 55 may extend from this bottom. The sloped section 57A may have a slope of 1% or less, preferably of 0.5% or less. For example, the sloped section 57A and the contact surface 513, or the virtual plane, may form an angle of 1° or less, preferably 0.5° or less. The slope of the sloped section 57A may be constant. For example, the sloped section 57A may be a (e.g. single flat) surface extending from the foot section 51, in particular foot sub-section 511, e.g. towards or to the side wall 55.

Thus, an ink film 2 deformed by the deforming unit 5A in such a way that the foot section 51 contacts the colorant carrier 3, on which the ink film 2 is provided, results in one or more grooves in the ink film 2. The one or more grooves comprise at least one or more grooves provided by at least the foot section 51. The one or more grooves may comprise a groove that is on the one hand formed by the foot section 51 and on the other hand formed by the sloped section 57A. The width of the groove thus depends on the thickness of the ink film 2. In particular, the groove has a (inclined) side wall that is formed by the sloped section 57A, wherein the height of this side wall, which extends from a bottom formed by the foot section 51 to a rim of the groove, depends on the height of the ink film 2. Thus, the rims of the groove may serve as a good basis for determining the thickness of the ink film 2.

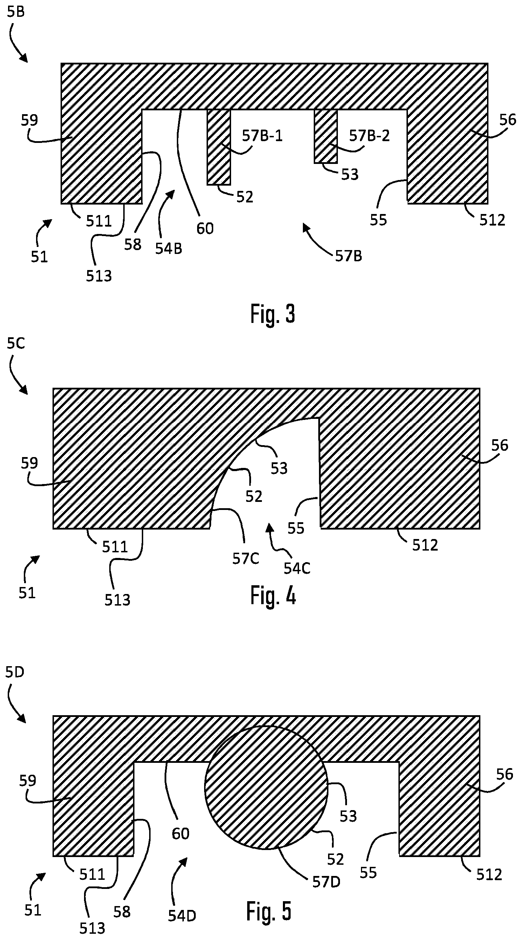

Fig. 3 shows the deforming unit 5B, wherein the same or equivalent features as those already explained with reference to Figs. 1 and 2 are commonly labelled, and the detailed explanation is omitted for simplicity.

The deforming unit 5B may comprise a recessed section 54B that comprises, or contains, the first and second deforming sections 52, 53. The recessed section 54B may be delimited by the side wall 55 and/or a (further) side wall 58. The side wall 58 may be provided by a (further) leg 59. The leg 59 may comprise at least part of the foot section 51, such as the foot sub-section 511. The recessed section 54B may be delimited by the foot sub-section 511 and/or foot sub-section 512, such as by a rim of the foot sub-section 511 and/or foot sub-section 512. The recessed section 57B may be a gap or a groove.

The deforming unit 5B may comprise a plurality of protrusions 57B that comprise the first deforming section 52 and/or the second deforming section 53. The plurality of protrusions 57B may comprise at least a first protrusion 57B-1 and a second protrusion 57B-2. The first protrusion 57B-1 may comprise, at its distal end, the first deforming section 52. The second protrusion 57B-2 may comprise, at its distal end, the second deforming section 53. The plurality of protrusions 57B (57B-1, 57B-2) may be arranged (e.g., completely) within the recessed section 54B. For example, the recessed section 54B may be delimited by a bottom 60, wherein the plurality of protrusions 57B (57B-1, 57B-2) may be arranged on, and/or extend from, the bottom 60, e.g. with different heights, respectively. The deforming unit 5B may comprise a comb-like structure comprising the plurality of protrusions 57B and, optionally, the leg 56 and/or the leg 59. In other words, the plurality of protrusions 57B, or at least the first and second protrusions 57B-1 and 57B-2, may form at least part of the comb-like structure.

Thus, an ink film 2 deformed by the deforming unit 5B in such a way that the foot section 51 contacts the colorant carrier 3, on which the ink film 2 is provided, results in one or more grooves in the ink film 2. The one or more grooves comprise at least one or more first grooves provided by the foot section 51 and, if the thickness of the ink film 2 is high enough, one or more second grooves provided by the plurality of protrusions 57B comprising the deforming sections 52, 53, respectively. The one or more first grooves may have respective bottoms that are all arranged on the same level, such as that of the colorant carrier 3/flat surface 31. The one or more second grooves may have respective bottoms that are provided on a level higher than the bottoms of the one or more first grooves. The bottoms of the one or more second grooves are, due to the first and second deforming sections being arranged at different depths with respect to the foot section 51, arranged on different levels.

Fig. 4 shows the deforming unit 5C. Here again, the same or equivalent features as those already explained with reference to Figs. 1-3 are commonly labelled, and the detailed explanation is omitted for simplicity.

The deforming unit 5C comprises a recessed section 54C that comprises, or contains, the first and second deforming sections 52, 53. At least part of the recessed section 54C may be delimited by the side wall 55. The recessed section 54C may be a gap or groove. The deforming unit 5C may comprise a curved section 57C, which in the example shown in Fig. 4 is curved in a concave manner. In another example, the curved section 57C may be convex manner. The curved section 57C comprises the first deforming section 52 and the second deforming section 53. For example, the first and second deforming sections 52, 53 may be defined by the circumference of the curved section. The first and second deforming section 52, 53 may be distanced from one another with respect to the circumference. The curved section 57C may delimit the recessed section 54C, e.g. on a lateral side and/or on a bottom side of the recessed section 54C. The curved section 57C may extend from the foot section 51, e.g. from the foot 511, in particular from a rim provided by the foot 511, towards and preferably to the side wall 55.

Thus, an ink film 2 deformed by the deforming unit 5C in such a way that the foot section 51 contacts the colorant carrier 3, on which the ink film 2 is provided, results in one or more grooves in the ink film 2. The one or more grooves comprise at least one or more grooves provided by at least the foot section 51. The one or more grooves may comprise a groove that is on the one hand formed by the foot section 51 and on the other hand formed by the curved section 57C. The width of the groove thus depends on the thickness of the ink film 2. In particular, the groove has a (e.g. convex) side wall that is formed by the curved section 57C, wherein the height of this side wall, which extends from a bottom formed by the foot section 51 to a rim of the groove, depends on the height of the ink film 2.

Fig. 5 shows the deforming unit 5D. Here again, the same or equivalent features as those already explained with reference to Figs. 1-4 are commonly labelled and the detailed explanation is omitted for simplicity.

The deforming unit 5D may comprise a recessed section 54D that comprises, or contains, the first and second deforming sections 52, 53. At least part of the recessed section 54D may be delimited by the side wall 55 and/or the (further) side wall 58. The recessed section 54D may be a gap or a groove. The deforming unit 5D comprises a curved section 57D that may be convex. The curved section 57D comprises the first and second deforming sections 52, 53. The curved section 57D may be part of a spherical, cylindrical, or conical segment. The curved section 57D may be provided by a structure protruding form a bottom 60 delimiting the recessed section 54D. For example, the structure may be at least part of a sphere, a cylinder, or a cone. The curved section 57D may be completely arranged in the recessed section 54D. There may be a gap between the side wall 55 and a (first) lateral side of the curved section 57D and/or a (further) gap between the side wall 58 and a (second) lateral side of the curved section 57D. The first and the second deforming sections 52, 53 may be defined by the perimeter or circumference of the curved section 57D.

Thus, an ink film 2 deformed by the deforming unit 5D in such a way that the foot section 51 contacts the colorant carrier 3, on which the ink film 2 is provided, results in one or more grooves in the ink film 2. The one or more grooves comprise at least one or more first grooves provided by the foot section 51 and, if the thickness of the ink film 2 is high enough, one or more second grooves provided by the curved section 57D comprising the deforming sections 52, 53, respectively. The one or more first grooves may have respective bottoms that are all arranged on the same level, such as that of the colorant carrier 3/flat surface 31. The one or more second grooves may have a bottom that is provided on a level higher than the bottoms of the one or more first grooves, and that is complementary shaped to at least part of the curved section 57D, such as shaped to be concave.

Accordingly, by the deforming unit 5 (5A, 5B, 5C, 5D) a specific deformation may be provided, or formed, in the ink film 2. Based on such a deformation and an analysis using at least the optical unit 4, the thickness of the ink film 2 may be determined or at least estimated. As such, a particularly low-cost and easy measurement of the thickness of the ink film 2 can be achieved.

The deforming unit 5 (5A-5D) may be produced in many different ways. For example, the deforming unit 5 may be a monolithic part. Preferably, the deforming unit 5 is a machined part or a 3D-printed part.

As shown in Fig. 1, the measuring device 1 may further comprise a processing unit 7 functionally connected to the optical unit 4. The processing unit 4 may comprise a processor and/or a (electronic) storage device, i.e. memory. On the storage device, data relating to the measuring device, in particular to the deforming unit 5, may be stored. For example, the data may include data relating to the first and second depths, such as a geometry defined by the first and second depths. The processing unit 7 is configured to receive signals from the optical unit 4. For example, the processing unit 7 is configured to receive an (digital) image from the optical unit 4. For example, the signals received by the processing unit 4 may form an (digital) image in the processing unit 7 and/or form an (digital) image that can be received by the processing unit 7. On the storage device of the processing unit 7, program code, in particular a software, such as an image analysis software, may be provided. The program code may be configured to analyse the signals received from the optical unit 4.

The processing unit 7 may be configured to determine, or at least estimate, preferably by using the program code, a thickness of the ink film 2 based at least on the signals received from the optical unit 4. For example, based on the signals, the processing unit 7 determines that a specific deformation provided by the deforming unit 5 is present in the section 21 of the ink film 2 (such as a deformation provided by at least the foot section 51 and the first deforming section 52, but not by the second deforming section 53) and based on this specific deformation, determine a thickness of the ink film 2. For example, the processing unit 7 recognises that the deformation in the section 21 is deformed by the first deforming section 52 but not by the second deforming section 53, so that the ink film thickness must be greater than the first depth but less than the second depth, i.e. the ink film thickness is in a range between the first depth and the second depth.

The processing unit 7 may be configured to determine, or at least estimate, a thickness of the ink film based on the signals and a geometrical property of the first and second deforming sections 52, 53. The geometrical property may be stored on the storage device of the processing unit 7. For example, the processing unit 7 determines that the deformation provided by the deforming unit 5 has a specific (total) width. The groove in the section 21 may extend from a first rim provided by the foot section 51 to a second rim provided by the sloped section 57A or curved section 57C (57D). The width provided by the foot section 51 is subtracted from the total width resulting in a remaining width. A calculation based on this remaining width and the geometrical property (e.g. slope and/or curve) provide the ink film thickness. For example, multiplication of the remaining width with the known slope of the sloped section 57C (i.e. a height change per mm) provides the ink film thickness.

Deformation of the ink film 2 by the deforming unit 5B may result, as explained above, in one or more first deformations (such as grooves) provided by the foot section 51 and, if the ink film thickness is high enough, in one or more deformations (such as grooves) provided by the first and second deforming sections 52, 53, such as only in a single second deformation provided by the first deforming section 52. The processing unit 7 may determine that, based on the received signals (e.g. based on a digital image), there are only one or more first deformations provided by the foot section 51, and thus no one or more second deformations provided by the first and second deforming sections 52, 53, and based on this determined number of deformations determine that the thickness of the ink film 2 in a section 21 is less than the first depth. On the other hand, if the processing unit 7 determines, based on the received signals, that there are one or more first deformations, but only one second deformation which is provided by the first deforming section 52, and thus not by the second deforming section 53, the processing unit 7 may determine that the thickness of the ink film 2 in the section 21 is greater than the first depth but less than the second depth, because there is no deformation provided by the second deforming section 53.

The measuring device 1 may further comprise a light source 8 arranged to emit light onto at least the section 21. The light that can be emitted by the light source 8 may be homogenous and/or white light. The light source 8 may comprise one or more LEDs.

The measuring device 1 may comprise a cleaning device 9 arranged to at least partly remove, from the deforming unit 5, ink that has been transferred from the ink film 2 onto the deforming unit 5 contacting the colorant carrier. For example, the deforming unit 5 and the cleaning device 9 may move relative to each other (e.g. the cleaning device 9 moves relative to the stationary deforming unit 5, or the deforming unit 5 moves relative to the stationary cleaning device 9) in order to remove ink from the deforming unit 5 and thus clean the latter. For example, the cleaning device 9 may comprise a mechanical cleaner, such as a brush or a scrubber, and/or a fluidic cleaner, such as a blower, for removing ink from the deforming unit 5.

The deforming unit 5 may be movable between a retracted position and a measuring position. In the retracted position, the deforming unit is distanced from the ink film 2, thereby not deforming the ink film 2. In the measuring position, the deforming unit 5 is, by the foot section 51, in contact with the colorant carrier 3, thereby deforming the ink film 2. The deforming unit 5 may be arranged to be manually moveable between the retracted position and the measuring position. Optionally, the measuring device 1 may comprise a drive unit, such as a (small) motor, arranged to move the deforming unit 5 between the retracted position and the measuring position. Alternatively, the deforming unit 5 may be arranged stationary in the measuring position, i.e. with substantially no movability in order to move away from the colorant carrier 3. The direction along which the deforming unit 5 may move between the retracted position and the measuring position may be transverse, in particular perpendicularly, to the direction 32 of the colorant carrier 3.

The colorant carrier 3 may move continuously or intermittently. For example, the deforming unit 5 may move into the measuring position when the intermittently moving colorant carrier 3 is stopped. Alternatively, the deforming unit 5 may be in the measuring position as the colorant carrier 3 moves.

The processing unit 7 may be configured to output the determined thickness of the ink film, e.g. to a delivery device for transferring fresh colorant onto the colorant carrier 3 in order to modify (such as increase) the thickness of the ink film 2. Alternatively, the thickness of the ink film 2 outputted by the processing unit 7 may be used for a manual adaption of the thickness of the ink film.

A measurement by the measuring device 1 may be continuously or intermittently (discontinuously) and/or during a process using the ink (such as a printing process) or in a measuring process independent from a process using the ink. The deforming unit 5 may be flexibly supported or loaded, such as spring loaded, (e.g. in a direction transverse, in particular perpendicularly, to the direction 32) in order to limit a force exerted by the deforming unit 5 onto the colorant carrier 3. Thereby, the colorant carrier 3 and, if present, drive or guiding components for the colorant carrier 3, such as (e.g. deflection) rollers, can be protected.

The measuring device 1 may comprise a support 10 arranged to support a section of the colorant carrier 3, which section is in contact, or can be brought into contact, with the deforming unit 5. The support 10 may comprise a rigid support and/or a roller. The roller may be used for guiding or deflecting the colorant carrier 3. The roller may be a roller, such as a deflection roller, which a printing device already comprises. In other words, the measuring device may be designed to be used in the printing device in such a way that a roller (e.g. a deflection roller) already present in the printing device is used as the support 10.

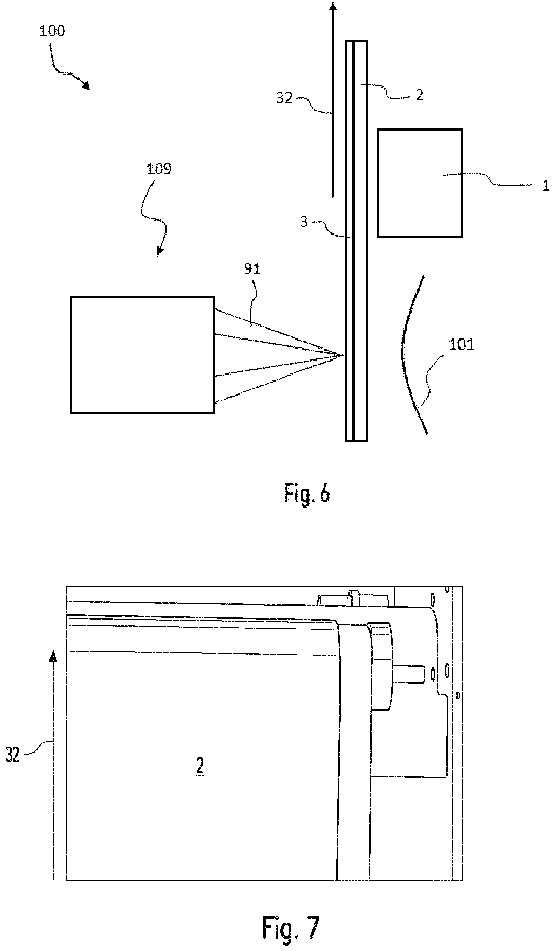

Fig. 6 shows a printing device 100 comprising the measuring device 1 as described above. The printing device 100 may comprise the colorant carrier 3 as explained above. The printing device 100 further comprises a delivery device 109 arranged to deliver, in particular by using an energy beam 91 (such as a laser), at least part of a colorant provided by the ink film 2 from the colorant carrier 3 to a substrate 101. When seen along the moving direction 32 of the colorant carrier 3, the measuring device 1 may be arranged downstream of the delivery device 109 and, preferably, upstream of an inking unit for providing an ink film on the colorant carrier 3, such as a transfer device configured to transfer fresh colorant towards, or onto, the colorant carrier 3. Accordingly, the delivery device 109 may first deliver at least part of a colorant, i.e. ink, from the section 21 to the substrate 101 or a transmission means. After this, the section 21 may move along the direction 32 in order to be measured by the measuring device 1. Then, the inking unit, such as the transfer device, may provide an ink film on the colorant carrier 3, e.g. according to the preceding thickness measurement.

By the energy beam 91, part of the ink film 2 can be delivered from the colorant carrier 3 to the substrate 101. More specifically, the energy beam 91 introduces locally energy into the ink film 2, whereby a part of the ink film will be removed and delivered onto the substrate 101. For example, this part of the ink film 2 is heated (e.g. directly and/or indirectly via the colorant carrier 3), by the energy beam 91, whereby a solvent of the ink film 2 suddenly evaporates and thus part of the ink film 2 is moved away from the colorant carrier 3, e.g. onto the substrate 101.

In the following, an example using the measuring device according to an embodiment is described.

Fig. 7 shows a simplified image of an ink film 2 not deformed by the deforming unit 5. As shown, the ink film 2 is substantially undisturbed, which means that besides possible void areas resulting from a delivery device having delivered at least part of the ink film 2 from the colorant carrier 3, the ink film 2 does not have any disturbances.

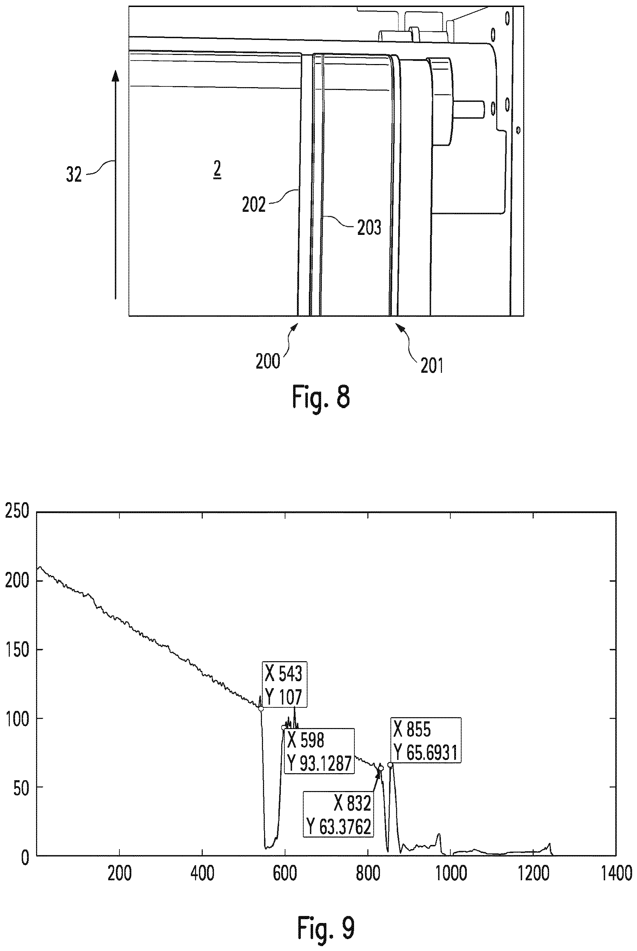

Fig. 8 shows the ink film 2 during a thickness measurement using the measuring device 1. During the measurement, the deforming unit 5 according to the type shown in Fig. 2, the deforming unit 5A, contact the colorant carrier 3. Thereby, two grooves 200, 201 being complementary formed to at least part of the deforming unit 5A are formed. The fist groove 200 is provided, or formed, by the foot section 51 (foot sub-section 511) and a part of the sloped section 57A. Accordingly, the groove 200 (or groove) is on the left lateral side delimited by a (vertical) rim 202 formed by the foot section 51 and on the right lateral side delimited by a (vertical) rim 203 formed by the sloped section 57A. The left rim has the reference sign 202. The groove 201 is obtained by the foot sub-section 512 only.

A camera was used as the optical unit 4. The exposure time was $2\mu s$, the gain was 1 dB, and the brightness was 85%. Further, a light source 8 was used, namely LEDs (GVMO LEDs) at their maximum intensity. The speed of the colorant carrier 3 along the moving direction 32 was 80 mm/s. The coloring roll was operated at 1880 rpm. According to another thickness measurement, the thickness of the ink film 2 was determined to be $22\mu m$. The deforming unit 5 had the following dimensions: height (measured parallel to the depths): 5mm; width of foot sub-section 511, 512 (measured perpendicular to the depths): 4mm; slope of the sloped section 57A (measured with respect to the width): 0.476%, i.e., a height from $0\mu m$ to $200\ \mu m$ within 42mm between the foot sub-sections 511, 512, meaning $4.76\ \mu m/mm$. The total width of the deforming unit 5 was 50mm.

Fig. 9 shows a profile of the deformed ink film 2 (i.e. of the section 21) obtained by using at least the optical unit 4. The axes in Fig. 9 are given in pixels. In a calibration step, the width of the deforming unit 5A (50mm) is brought into relation with the width of the deforming unit 5A expressed in pixels. As shown in Fig. 9, the (total) width along the x axis of the deforming unit 5A is from pixel 543 to pixel 855, which corresponds to a width of 312 pixels. Thus, according to the calibration step, one pixel corresponds to 0.1603mm (0.1603mm per pixel).

In Fig. 9, the area from pixel 543 to pixel 598 corresponds to the area of the ink film 2 that was deformed by the foot sub-section 511 and the sloped section 57A. This area corresponds to 55 pixels, which corresponds to 8.82mm (55 pixels x 0.1603 mm/pixel). This means that the width of the groove 200 formed by the foot sub-section 511 and the sloped section 57A of is 8.82mm.

The width of the portion of the ink film 2 that is deformed by the sloped section 57A (w), i.e. the width of the area of the ink film 2 that was in contact with the sloped section 57A, can be obtained by subtracting the width of one leg (4mm; l) from the total width of the groove 200 (8.82mm; t):

$$w = t - l = 8.82mm - 4mm = 4.82mm.$$

As the slope (s) of the sloped section 57A is known (see above; $200\mu m$ in 42mm width: $200/42 = 4.76\mu m/mm$), the thickness of the ink film 2 (t) can be calculated by multiplying the width of the deformed portion with the slope:

$$t = w \times s = 4.76\mu m/mm \times 4.82mm = 22.9\mu m$$

Accordingly, the thickness of the ink film 2 measured by the measuring device 1 is $22.9\mu m$.

If the thickness by the other measurement method (22.0mm) is more accurate, then the error in measurement is:

$$((22.9mm - 22.0mm)/22.0mm) \times 100\% = 4.1\%.$$

In sum, the method may involve bringing the deforming unit 5, e.g. as a machined and/or 3D-printed part, with well-known calibrated deforming sections 52, 53, such as indentations, of different depths into contact with the colorant carrier 3, and analysing an image of the ink film 2 after the contact. The thickness of the ink film 2 may be determined based on the location of the last indentation that was provided by the deforming sections 52, 53 in the ink surface.

The thickness of the ink film 2 obtained by using the measuring device 1 may be compared to a desired thickness of the ink film 2. If the measured thickness deviates from the desired thickness, an ink film control parameter (e.g. for controlling an inking unit for providing an ink film on the colorant carrier 3, such as a transfer device configured to deliver fresh ink onto the colorant carrier) may be automatically adjusted (e.g. such that the inking unit provides more or less fresh ink onto the colorant carrier) to achieve the desired thickness.

The processing unit 7 may be configured to use machine learning and/or image recognition methods to determine a width of a groove imaged in a digital image received from the optical unit 4.

It should be clear to a skilled person that the embodiments shown in the figures are only preferred embodiments, but that, however, also other designs of the measuring device 1 are possible. In particular, also other designs of the deforming unit 5 are possible, so that, for example, the designs of the deforming units 5A-5D may be combined with one another. The design of the deforming unit 5A may be combined with the design of the deforming unit 5B in such a way that each of the protrusions 57B-1, 57B-1 comprises, at its respective distal end, a respective sloped section 57A. The design of the deforming unit 5C may be combined with the design of the deforming unit 5B in such a way that each of the protrusions 57B-1, 57B-1 comprises, at its respective distal end, a respective (e.g., concave) curved section 57C. The design of the deforming unit 5D may be combined with the design of the deforming unit 5B in such a way that each of the protrusions 57B-1, 57B-1 comprises, at its respective distal end, a respective (e.g., convex) curved section 57D. The designs of the deforming units 5A- 5D may be combined with one another in such a way that a first protrusion of the plurality of protrusions 57B comprises, at its distal end, a sloped section 57A, a second protrusion of the plurality of protrusions 57B comprises, at its distal end, a (concave) curved section 57C, and a third protrusion of the plurality of protrusions 57C comprises, at its distal end, a (convex) curved section 57D. Further, the measuring device 1 may comprise a plurality of deforming units 5.

## Claims

1. A measuring device (1) for measuring the thickness of an ink film (2) on a colorant carrier (3), in particular a colorant belt, with a flat surface (31) supporting the ink film (2), the measuring device (1) comprising:

   an optical unit (4), such as an imaging unit, in particular a camera, arranged to receive light reflected by a section (21) of the ink film (2), and
   a deforming unit (5; 5A, 5B, 5C, 5D) arranged to deform at least part of the section (21) of the ink film (2), wherein the deforming unit (5; 5A, 5B, 5C, 5D) comprises:

   - a foot section (51) arranged to contact the colorant carrier (3),
   - a first deforming section (52) arranged at a first depth with respect to the foot section (51), and
   - a second deforming section (53) arranged at a second depth with respect to the foot section (51), wherein the second depth is greater than the first depth.

2. The measuring device (1) according to claim 1, wherein the deforming unit (5; 5A, 5B, 5C, 5D) comprises a recessed section (54A, 54B, 54C, 54D), such as a gap or a groove, wherein the recessed section (54A, 54B, 54C, 54D) comprises the first and second deforming sections (51, 52), wherein, optionally, at least part of the recessed section (54A, 54B, 54C, 54D) is delimited by the foot section (51) and/or a side wall (55, 58), such as a side wall (55, 58) of a leg (56, 59) comprising at least part of the foot section (51).

3. The measuring device (1) according to claim 1 or 2, wherein the deforming unit (5A) comprises a sloped section (57A), wherein the sloped section (57A) comprises the first deforming section (52) and/or the second deforming section (53), wherein, optionally, the sloped section (57A) is sloped with respect to a contact surface (513) of the foot section (51) and/or a side wall (55) of the deforming unit (5A), such as a side wall (55) delimiting the recessed section (54A) and/or provided by a leg (56) comprising at least part of the foot section (51).

4. The measuring device (1) according to claim 3, wherein the sloped section (57A) has a slope of 1% or less, preferably of 0.5% or less.

5. The measuring device (1) according to any of the preceding claims, wherein the deforming unit (5B) comprises a plurality of protrusions (57B; 57B-1, 57B-2), wherein the plurality of protrusions (57B; 57B-1, 57B-2) comprises the first deforming section (52) and/or the second deforming section (53), wherein the deforming unit (5B) optionally comprises a comb-like structure comprising the plurality of protrusions (57B; 57B-1, 57B-2).

6. The measuring device (1) according to any of the preceding claims, wherein the deforming unit (5C, 5D) comprises a curved section (57C, 57D), wherein the curved section (57C, 57D) comprises the first deforming section (52) and/or the second deforming section (53).

7. The measuring device (1) according to any of the preceding claims, wherein the foot section (51) comprises one or more foot sub-sections (511, 512), wherein, optionally, the first deforming section (52) and/or the second deforming section (53) extend/s between the foot sub-sections (511, 512).

8. The measuring device (1) according to any of the preceding claims, wherein the foot section (51) comprises a flat or horizontal contact surface (513) arranged to contact the colorant carrier (3), wherein the first and second depths (52, 53) are with respect to the contact surface (513) or correspond to first and second distances between the first and second deforming sections (52, 53), respectively, and a virtual plane comprising, or parallel to, the contact surface (513).

9. The measuring device (1) according to any of the preceding claims, comprising a processing unit (7) configured to receive signals, such as an image or signals for forming an image, from the optical unit (4), wherein the processing unit (7) is preferably configured to send signals, which are based on the signals received from the optical unit (4), to a device configured to adjust a thickness of the ink film, such as an inking unit for providing an ink film on the colorant carrier (3).

10. The measuring device (1) according to claim 9, wherein the processing unit (7) is configured to determine, or at least estimate, a thickness of an ink film (2) based on the signals and, optionally, on a geometrical property of the first and second deforming sections (52, 53), such as a slope and/or a curve defined by the first deforming section (52) and/or second deforming section (53).

11. The measuring device (1) according to any of the preceding claims, comprising:

    - a light source (8) arranged to emit light onto at least the section (21) of the ink film (2), and/or
    - a cleaning device (9) arranged to remove, from the deforming unit (5; 5A, 5B, 5C, 5D), ink that has been transferred from the ink film (2) onto the deforming unit (5; 5A, 5B, 5C, 5D) contacting the colorant carrier (3), and/or
    - a support (10) arranged to support a section of the colorant carrier (3), which section is in contact with the deforming unit (5; 5A, 5B, 5C, 5D), wherein, optionally, the support (10) comprises a rigid support or a roller, such as a deflection roller.

12. The measuring device (1) according to any of the preceding claims, wherein the deforming unit (5; 5A, 5B, 5C, 5D) is flexibly supported or loaded, such as spring loaded.

13. A printing device (100) comprising:

    a measuring device (1) according to any of the preceding claims,
    a colorant carrier (3) configured to move along a direction (32), and
    a delivery device (109) arranged to deliver at least part of an ink film (2) from the colorant carrier (3) to a substrate (101) or a transmission means.

14. A measuring method for measuring the thickness of an ink film (2) on a colorant carrier (3), wherein the method uses a deforming unit (5; 5A, 5B, 5C, 5D) with a foot section (51) and at least first and second deforming sections (52, 53), wherein the first deforming section (52) is arranged at a first depth with respect to the foot section (51), and wherein the second deforming section (53) is arranged at a second depth with respect to the foot section (51), wherein the second depth is greater than the first depth, or uses a measuring device (1) according to any of claims 1-12, wherein the method comprises the steps of:

    - contacting, by the foot section (51), a colorant carrier (3), wherein the colorant carrier (3) carries an ink film (2);
    - deforming, by the first and/or second deforming sections (52, 53), a section (21) of the ink film (2), thereby obtaining a deformed section (21); and

- receiving, by an optical unit (4) such as an imaging unit, in particular a camera, light reflected by at least the deformed section (21) of the ink film (2).

15. The measuring method according to claim 14, comprising the steps of:

- receiving, by a processing unit (7), signals, such as an image or signals for forming an image, from the optical unit (4), and
- determining or at least estimating, by the processing unit (7), a thickness of the ink film based on the signals and, optionally, on a geometrical property of the first and second deforming sections (52, 53), such as a slope and/or a curve defined by the first deforming section (52) and/or second deforming section (53); and/or
- calibrating, e.g. by using a calibration device, wherein the step of calibrating preferably comprises measuring a reference ink film thickness, e.g. by the calibration device, and comparing the reference ink film thickness to the determined or at least estimated thickness of the ink film.

Fig. 1

Fig. 2

Fig. 3

Fig. 4

Fig. 5

Fig. 6

Fig. 7

Fig. 8

X 543
Y 107

X 598
Y 93.1287

X 832
Y 63.3762

X 855
Y 65.6931

Fig. 9

**EUROPEAN SEARCH REPORT**

Application Number

EP 24 17 5569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/341720 A1 (OO GUOLIN [SG] ET AL) 27 October 2022 (2022-10-27) * paragraph [0002] - paragraph [0048]; claim 20; figure 16 * ----- | 1-15 | INV. G01B3/28 G01B5/06 G01B11/06 |
| A | US 6 026 586 A (WADDLES CHARLES EDWARD [US]) 22 February 2000 (2000-02-22) * figure 1 * ----- | 1-14 | |
| A | DE 196 41 815 C2 (BUDEI FRANK [DE]) 6 December 2001 (2001-12-06) * figures 1, 2a, 2b, 2c * ----- | 1-14 | |
| A | US 2 814 122 A (EUVERARD MAYNARD R) 26 November 1957 (1957-11-26) * figure 1 * ----- | 1-14 | |

TECHNICAL FIELDS SEARCHED (IPC)

G01B

The present search report has been drawn up for all claims

| Place of search | Date of completion of the search | Examiner |
|---|---|---|
| Munich | 21 October 2024 | Malcoci, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5569

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| US 2022341720 | A1 | 27-10-2022 | EP | 4080157 A1 | 26-10-2022 |
| | | | US | 2022341720 A1 | 27-10-2022 |
| US 6026586 | A | 22-02-2000 | NONE | | |
| DE 19641815 | C2 | 06-12-2001 | NONE | | |
| US 2814122 | A | 26-11-1957 | NONE | | |

EPO FORM P0459

For more details about this annex : see Official Journal of the European Patent Office, No. 12/82